# EUROPEAN PATENT APPLICATION

(11) **EP 2 595 347 A1**
(43) Date of publication of application: **22.05.2013**
(21) Application number: 10854617.7
(22) Date of filing: 14.10.2010
(51) Int. Cl.: H04L 12/56

(54) **METHOD, SYSTEM AND TERMINAL FOR PSEUDO WIRE OAM ATTRIBUTE CONFIGURATION**

(30) Priority: 12.07.2010 CN 201010231037
(71) Applicant: ZTE Corporation, Shenzhen, Guangdong 518057 (CN)
(72) Inventor: ZHANG, Fei, Shenzhen Guangdong 518057 (CN); WU, Bo, Shenzhen Guangdong 518057 (CN)
(74) Representative: D'Halleweyn, Nele Veerle Trees Gertrudis
(86) International application number: PCT/CN2010/077741
(87) International publication number: WO 2012/006825

(57) **Abstract**

A method, system and terminal for pseudowire OAM (Operation Administration and Maintenance) attributes configuration are disclosed by the present invention. Said method includes: during a dynamic establishment process of a pseudowire, provider edges (PEs) exchanging signaling carrying parameters related to pseudowire OAM attributes configuration with each other, and a signaling receiver implementing OAM attributes configuration according to said parameters related to OAM attributes configuration. The present invention is applicable for statically established pseudowires or pseudowires established in a static- dynamic combination manner.

## Description

### Technical Field

The present invention relates to the field of data network communication, and in particular, to a method, system and terminal for configuring pseudowire OAM in Multiple Protocol Label Switching (MPLS) and Multiple Protocol Label Switching-Transport Profile (MPLS-TP) networks.

### Background Art

With the development of IP data networks, the expansibility, upgradability and compatible communication capability of the IP network per se are very high, while the flexibility of the traditional communication network in upgrading, expansion and intercommunication is relatively poor and is limited by the transmission mode and the type of the service, meanwhile the commonality among newly established networks is also very poor and are not favorable for intercommunication management. Therefore, it is a problem being considered by everyone whether a repeated network is established respectively or the existing or public resources are fully utilized to achieve the purpose of network upgrading and expanding application when the traditional communication network faces with upgrading and expanding application, and how to achieve this purpose. Pseudowire Emulation Edge to Edge (PWE3) is precisely one of the methods proposed for solving the problem of combination of the traditional communication network and existing packet network.

PWE3 is an edge-to-edge layer-2 service bearer technique, and belongs to Layer 2 Virtual Private Networks (L2VPN) in a point-to-point manner. In two Provider Edge (PE) devices in a Packet Switched Network (PSN), it simulates various layer 2 services of the Customer Edge (CE) end, for example Asynchronous Transfer Mode (ATM), Time Division Multiplexing (TDM), Frame Relay (FR) and the like, through a channel (may be a MPLS channel, GRE, L2TPv3 or others) by using Label Distribution Protocol/Resource Reservation Protocol (LDP/RSVP) as a signaling, so that the layer 2 data at the CE end are transparently transmitted in the PSN.

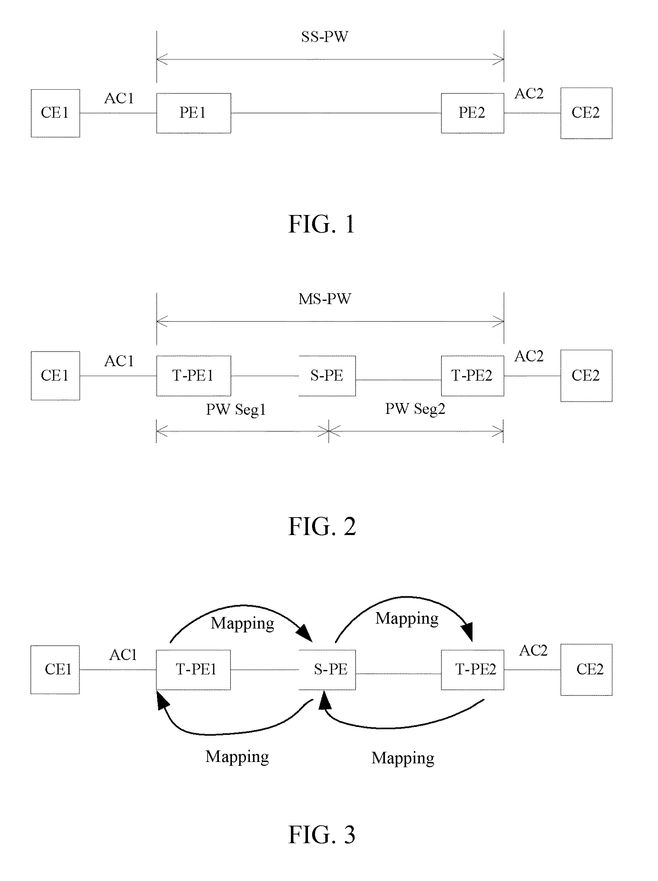

Pseudowire (PW) can be divided into Single Segment Pseudowires and Multi-Segment Pseudowires. Single Segment Pseudowire (SS-PW) means that PWs are directly established between two PEs without passing through other switching nodes. As shown in FIG. 1, a PW is established between PE1 and PE2. Multi-Segment Pseudowire (MS-PW) means that the PW established between two Terminating Provider Edges (T-PEs) needs to pass through one or more intermediate nodes, which are called as Switching PEs (S-PEs). As shown in FIG. 2, a MS-PW established between T-PE1 and T-PE2 passes through an intermediate node between the T-PE1 and T-PE2, and this node is called as S-PE, and T-PE1 and T-PE2 are called as T-PEs. The dynamic establishing process of SS-PW and MS-PW adopts Label Distribution Protocol (LDP), and the manner for establishing SS-PW may be based on RFC4447; while the establishing process of MS-PW may refer to draft-ietf-pwe3-dynamic-ms-pw, etc.

At present, mechanisms for implementing Operation Administration and Maintenance (OAM) of PW are defined in the PWE3 working team, and are mainly used for detection and announcement of PW default. These mechanisms include PW OAM message mapping, intercommunication between Ethernet and PW OAM, Virtual Circuit Connectivity Verification (VCCV), and PW Status TLV. The former two technical solutions specify how to achieve mapping and intercommunication between layer 2 service OAM and PW OAM, and VCCV is connectivity detection mechanism for PW and defines three types of VCCV messages: ICMP Ping, BFD and LSP Ping; PW Status TLV is used to notify the status of the PW and AC link.

However, in the transmission network, the above OAM mechanisms are far from enough. Therefore, MPLS-TP expands the OAM function of PW by adding performance measurement (PM), fault management signal (FMS), Diagnostic Test and the like. Wherein PM includes Packet Loss measurement and Packet Delay measurement that are used to measure the packet loss and packet delay in the network, while FMS, as an intermediate node in the client layer for a service layer maintenance end point (MEP), inserts a FMS signal on the client layer transmission path passing through the service layer transmission path so as to inform the client layer of certain information of the MEP service layer, and the FMS signal can be divided into alarm indication signal (AIS), link down indication (LDI), lock reporting (LR) etc. Diagnostic Test is divided into two types, namely Data plane loopback, which is used to test whether the forwarding act of the data plane is normal or not, and Throughput estimation, which is used to test the bandwidth of the path.

All OAM functions may be divided into two types, i.e., proactive and on-demand. OAM functions of Proactive type mean that these OAM functions are immediately operated after a PW is successfully established until the PW is removed, including VCCV BFD, PM Loss/Delay, FMS, PW status, etc. While the on-demand type means that the functions will be operated in a certain time period after a PW is established, including LSP ping, PM Loss/Delay, Diagnostic test, etc. These OAM functions may be statically configured by network management, or may be configured by LSP ping or control plane. When the OAM attributes is configured by a control plane, the OAM attributes may be configured at the same time of establishing the PW, thus avoiding dividing the configuration of OAM attributes and establishment of PW into two processes, which is particularly suitable for OAM configuration of proactive type, thereby simplifying the processing flow. Drafts draft-ietf-ccamp-oam-configuration-fwk and draft-ietf-ccamp-rsvp-te-mpls-tp-oam-ext cover configuration of OAM attributes on LSP, but there is still no implementation solution for configuration of OAM attributes on PW currently.

### Summary of the Invention

In view of the above, the main object of the present invention is to provide a method and system for configuring PW proactive OAM attributes by a control plane, which is suitable for dynamically established SS-PW and MS-PW; a method and system for configuring PW proactive attributes by a LSP ping, which is suitable for dynamically or statistically established SS-PW and MS-PW.

In order to solve the above problem, the present invention provides a method for configuring pseudowire operation administration and maintenance attributes, comprising the following steps of: during a dynamic establishment process of a pseudowire, provider edges (PEs) exchanging a signaling, which carries parameters related to pseudowire operation administration and maintenance (OAM) attributes configuration, with each other, and signaling receivers implementing OAM attributes configuration according to the parameters related to OAM attributes configuration.

The above method may further have the following feature:
the PEs comprise an initiating end T-PE and an opposite end T-PE; the signaling receivers comprise an initiating end T-PE and an opposite end T-PE, and the step of the PEs exchanging a signaling with each other comprises:
   the initiating end T-PE sending to a downstream node a signaling, which carries the parameters related to OAM attributes configuration, the downstream node being a switching provider edge (S-PE) or the opposite end T-PE;
   after receiving the signaling carrying the parameters related to OAM attributes configuration from the initiating end T-PE or switching provider edge (S-PE), if the opposite end T-PE does not accept or modifies one or more parameters therein, carrying the parameters related to OAM attributes configuration in a signaling to inform the initiating end T-PE of parameters supported by the opposite end T-PE.

The above method may further have the following feature: the step of the PEs exchanging a signaling further comprises:
the initiating end T-PE further carrying OAM capability negotiation parameters in the signaling to inform the downstream node of OAM capabilities supported by the T-PE;
after receiving the OAM capability negotiation parameters from the initiating end T-PE or switching provider edge (S-PE), if the opposite end T-PE does not support one or more of OAM capabilities therein, carrying the OAM capability negotiation parameters in a signaling to inform the initiating end T-PE of OAM capabilities supported by the opposite end T-PE.

The above method may further have the following feature:
upon receiving the signaling carrying the parameters related to OAM attributes configuration, the downstream node of the initiating end T-PE configuring MIP attributes or MEP attributes.

The present invention further provides a method for configuring pseudowire operation administration and maintenance attributes, comprising the following steps of: after a pseudowire is successfully established, provider edges (PEs) exchanging a LSP ping message, which carries parameters related to pseudowire OAM attributes configuration, with each other, and message receivers implementing OAM attributes configuration according to the parameters related to OAM attributes configuration.

The above method may further have the following feature:
the PEs comprise an initiating end T-PE and an opposite end T-PE; the signaling receivers comprise an initiating end T-PE and an opposite end T-PE, and the step of the PEs exchanging a LSP ping message with each other comprises:
   the initiating end T-PE sending to a downstream node a LSP ping message, which carries the parameters related to OAM attributes configuration, the downstream node being a switching provider edge (S-PE) or the opposite end T-PE;
   after receiving the parameters related to OAM attributes configuration from the initiating end T-PE or the S-PE, if the opposite end T-PE does not accept or modifies one or more parameters therein, carrying the parameters related to OAM attributes configuration in a LSP ping message to inform the initiating end T-PE of parameters supported by the opposite end T-PE.

The above method may further have the following feature: the step of the PEs exchanging a LSP ping message further comprises:
the initiating end T-PE further carrying OAM capability negotiation parameters in the LSP ping message to inform the downstream node of OAM capabilities supported by the T-PE;
after receiving the OAM capability negotiation parameters from the initiating end T-PE or switching provider edge (S-PE), if the opposite end T-PE does not support one or more of OAM capabilities therein, carrying the OAM capability negotiation parameters in a LSP ping message to inform the initiating end T-PE of OAM capabilities supported by the opposite end T-PE.

The present invention further provides a system for configuring pseudowire operation administration and maintenance attributes, comprising an initiating end T-PE and an opposite end T-PE, wherein:
the initiating end T-PE is configured to: during a dynamic establishment process of a pseudowire, exchange a signaling, which carries parameters related to pseudowireoperation administration and maintenance (OAM) attributes configuration, with the opposite end T-PE, and implement OAM attributes configuration according to the parameters related to OAM attributes configuration.

The system may further have the following feature:
the initiating end T-PE is configured to: send to a downstream node a signaling, which carries the parameters related to OAM attributes configuration, the downstream node being a switching provider edge (S-PE) or the opposite end T-PE;
the opposite end T-PE is configured to: after receiving the signaling carrying the parameters related to OAM attributes configuration from the initiating end T-PE or switching provider edge (S-PE), if the opposite end T-PE does not accept or modifies one or more parameters therein, carry the parameters related to OAM attributes configuration in a signaling to inform the initiating end T-PE of parameters supported by the opposite end T-PE.

The above system may further have the following feature:
the initiating end T-PE is further configured to: carry OAM capability negotiation parameters in the signaling to inform the downstream node of OAM capabilities supported by the T-PE;
the opposite end T-PE is further configured to: after receiving the OAM capability negotiation parameters from the initiating end T-PE or switching provider edge (S-PE), if the opposite end T-PE does not support one or more of OAM capabilities therein, carry the OAM capability negotiation parameters in a signaling to inform the initiating end T-PE of OAM capabilities supported by the opposite end T-PE.

The above system may further have the following feature:
the opposite end T-PE is further configured to: configure MEP attributes upon receiving the signaling carrying the parameters related to OAM attributes configuration.

The above system may further have the following feature:
the system further comprises a S-PE, which is configured to: after receiving the signaling or LSP ping message from an upstream node, forward the signaling or LSP ping message to a downstream node, and after receiving the signaling or LSP ping message from a downstream node, forward the signaling or LSP ping message to an upstream node.

The above system may further have the following feature:
the S-PE is further configured to: configure MIP attributes upon receiving the signaling carrying the parameters related to OAM attributes configuration.

The present invention further provides a system for configuring pseudowire operation administration and maintenance attributes, comprising an initiating end T-PE and an opposite end T-PE, wherein:
the initiating end T-PE is configured to: after a pseudowire is successfully established, exchange a LSP ping message, which carries parameters related to pseudowire OAM attributes configuration, with the opposite end T-PE, and implement OAM attributes configuration according to the parameters related to OAM attributes configuration.

The above system may further have the following feature:
the initiating end T-PE is used to send to a downstream node a LSP ping message, which carries the parameters related to OAM attributes configuration, the downstream node being a switching provider edge (S-PE) or the opposite end T-PE;
the opposite end T-PE is configured to: after receiving the parameters related to OAM attributes configuration from the initiating end T-PE or the S-PE, if the opposite end T-PE does not accept or modifies one or more parameters therein, carry the parameters related to OAM attributes configuration in a LSP ping message to inform the initiating end T-PE of parameters supported by the opposite end T-PE.

The above system may further have the following feature:
the initiating end T-PE is further configured to: carry OAM capability negotiation parameters in the LSP ping message to inform the downstream node of OAM capabilities supported by the T-PE;
the opposite end T-PE is further configured to: after receiving the OAM capability negotiation parameters from the initiating end T-PE or switching provider edge (S-PE), if the opposite end T-PE does not support one or more of OAM capabilities therein, carry the OAM capability negotiation parameters in a LSP ping message to inform the initiating end T-PE of OAM capabilities supported by the opposite end T-PE.

The present invention further provides a terminal for configuring pseudowire operation administration and maintenance attributes, and when serving as an initiating end terminating PE (T-PE), the terminal is configured to: during a dynamic establishment process of a pseudowire, exchange a signaling, which carries parameters related to pseudowireoperation administration and maintenance (OAM) attributes configuration, with an opposite end T-PE, and implement OAM attributes configuration according to the parameters related to OAM attributes configuration.

The initiating end T-PE is configured to: send to a downstream node a signaling, which carries the parameters related to OAM attributes configuration, the downstream node being a switching provider edge (S-PE) or the opposite end T-PE;
the initiating end T-PE is further configured to: carry OAM capability negotiation parameters in the signaling to inform the downstream node of OAM capabilities supported by the T-PE.

The terminal also serves as an opposite end T-PE, and when serving as an opposite end T-PE, the terminal is configured to: after receiving the signaling carrying the parameters related to OAM attributes configuration from the initiating end T-PE or a switching provider edge (S-PE), if the terminal does not accept or modifies one or more parameters therein, carry the parameters related to OAM attributes configuration in a signaling to inform the initiating end T-PE of parameters supported by the opposite end T-PE.

The opposite end T-PE is further configured to: after receiving the OAM capability negotiation parameters from the initiating end T-PE or switching provider edge (S-PE), if the opposite end T-PE does not support one or more of OAM capabilities therein, carry the OAM capability negotiation parameters in a signaling to inform the initiating end T-PE of OAM capabilities supported by the opposite end T-PE;
the opposite end T-PE is further configured to: configure MEP attributes upon receiving the signaling carrying the parameters related to OAM attributes configuration.

The present invention further provides a terminal for configuring pseudowire operation administration and maintenance attributes, and when serving as an initiating end terminating PE (T-PE), the terminal is configured to: after a pseudowire is successfully established, exchange a LSP ping message, which carries parameters related to pseudowire OAM attributes configuration, with an opposite end T-PE, and implement OAM attributes configuration according to the parameters related to OAM attributes configuration.

The initiating end T-PE is configured to: send to a downstream node a LSP ping message, which carries the parameters related to OAM attributes configuration, the downstream node being a switching provider edge (S-PE) or the opposite end T-PE;
the initiating end T-PE is further configured to: carry OAM capability negotiation parameters in the LSP ping message to inform the downstream node of OAM capabilities supported by the T-PE.

The terminal also serves as an opposite end T-PE, and the opposite end T-PE is configured to: after receiving the parameters related to OAM attributes configuration from the initiating end T-PE or the S-PE, if the opposite end T-PE does not accept or modifies one or more parameters therein, carry the parameters related to OAM attributes configuration in a LSP ping message to inform the initiating end T-PE of parameters supported by the opposite end T-PE;
the opposite end T-PE is further configured to: after receiving the OAM capability negotiation parameters from the initiating end T-PE or switching provider edge (S-PE), if the opposite end T-PE does not support one or more of OAM capabilities therein, carry the OAM capability negotiation parameters in a LSP ping message to inform the initiating end T-PE of OAM capabilities supported by the opposite end T-PE.

In the solution of the present invention, by adding negotiation of newly expanded capabilities of PW OAM, and adding a flow of OAM attributes configuration, the proactive PW OAM attributes can be configured during the process of establishing a PW through signaling, thus simplifying network management operation; or the proactive PW OAM attributes can be configured after a PW is successfully established by carrying negotiation of capabilities of PW OAM in the LSP ping and adding a flow of OAM attributes configuration, which is more applicable for statically established PWs or PWs established in a static- dynamic combination manner.

### Brief Description of Drawings

FIG. 1 illustrates SS-PW;
FIG. 2 illustrates MS-PW;
FIG. 3 illustrates PW OAM attributes configuration according to Example 1 of the present invention;
FIG. 4 is a flow of PW OAM attributes configuration according to Example 1 of the present invention;
FIG. 5 illustrates PW OAM attributes configuration according to Example 2 of the present invention;
FIG. 6 is a flow of PW OAM attributes configuration according to Example 2 of the present invention.

### Preferred Embodiments of the Present Invention

In order to make the purpose, technical solution and advantages of the present invention clearer, the present invention will be further described in detail with reference to the following examples and drawings.

In the present invention, the following expansions are performed:
1. adding negotiation of PW OAM capabilities expanded by MPLS-TP in the negotiation in the initiating Mapping message of LDP, or performing such expansion in a LSP ping message;
2. expanding TLV configured by PW OAM for configuring PW OAM attributes and carrying the TLV in a Mapping message, or performing the expansion in the LSP ping message.

The present invention provides a method for configuring pseudowire operation administration and maintenance attributes, comprising the following steps of:
during a dynamic establishment process of a pseudowire, provider edges (PEs) exchanging a signaling, which carries parameters related to pseudowire operation administration and maintenance (OAM) attributes configuration, with each other, and OAM attributes configuration is implemented according to the parameters related to OAM attributes configuration;
or, after a pseudowire is successfully established, provider edges (PEs) exchanging a LSP ping message, which carries parameters related to pseudowire OAM attributes configuration, with each other, and message receivers implementing OAM attributes configuration according to the parameters related to OAM attributes configuration.

Specifically, the PEs comprise an initiating end T-PE and an opposite end T-PE; the signaling receivers comprise an initiating end T-PE and an opposite end T-PE, and the step of the PEs exchanging a signaling with each other comprises:
the initiating end T-PE sending to a downstream node a signaling, which carries the parameters related to OAM attributes configuration, the downstream node being a switching provider edge (S-PE) or the opposite end T-PE;
after receiving the parameters related to OAM attributes configuration from the initiating end T-PE or switching provider edge (S-PE), if the opposite end T-PE does not accept or modifies one or more parameters therein, carrying the parameters related to OAM attributes configuration in a signaling to inform the initiating end T-PE of parameters supported by the opposite end T-PE.

Furthermore, the initiating end T-PE further carries OAM capability negotiation parameters in the signaling to inform the downstream node of OAM capabilities supported by the T-PE;
after receiving the OAM capability negotiation parameters from the initiating end T-PE or switching provider edge (S-PE), if the opposite end T-PE does not support one or more of OAM capabilities therein, it carries the OAM capability negotiation parameters in a signaling to inform the initiating end T-PE of OAM capabilities supported by the opposite end T-PE.

Furthermore, upon receiving the signaling carrying the parameters related to OAM attributes configuration, the downstream node of the initiating end T-PE configures MIP attributes or MEP attributes, wherein, the S-PE configures MIP attributes when receiving the signaling carrying the parameters related to OAM attributes configuration, and the T-PE configures MEP attributes when receiving the signaling carrying the parameters related to OAM attributes configuration.

Wherein, the PEs comprise an initiating end T-PE and an opposite end T-PE, and the step of the PEs exchanging a LSP ping message with each other comprises:
the initiating end T-PE sending to a downstream node a LSP ping message, which carries the parameters related to OAM attributes configuration, the downstream node being a switching provider edge (S-PE) or the opposite end T-PE;
after receiving the parameters related to OAM attributes configuration from the initiating end T-PE or the S-PE, if the opposite end T-PE does not accept or modifies one or more parameters therein, carrying the parameters related to OAM attributes configuration in a LSP ping message to inform the initiating end T-PE of parameters supported by the opposite end T-PE.

Furthermore, the initiating end T-PE further carries OAM capability negotiation parameters in the LSP ping message to inform the downstream node of OAM capabilities supported by the T-PE;
after receiving the OAM capability negotiation parameters from the initiating end T-PE or switching provider edge (S-PE), if the opposite end T-PE does not support one or more of OAM capabilities therein, it carries the OAM capability negotiation parameters in a LSP ping message to inform the initiating end T-PE of OAM capabilities supported by the opposite end T-PE.

### Example one: configuring PW OAM attributes by LDP

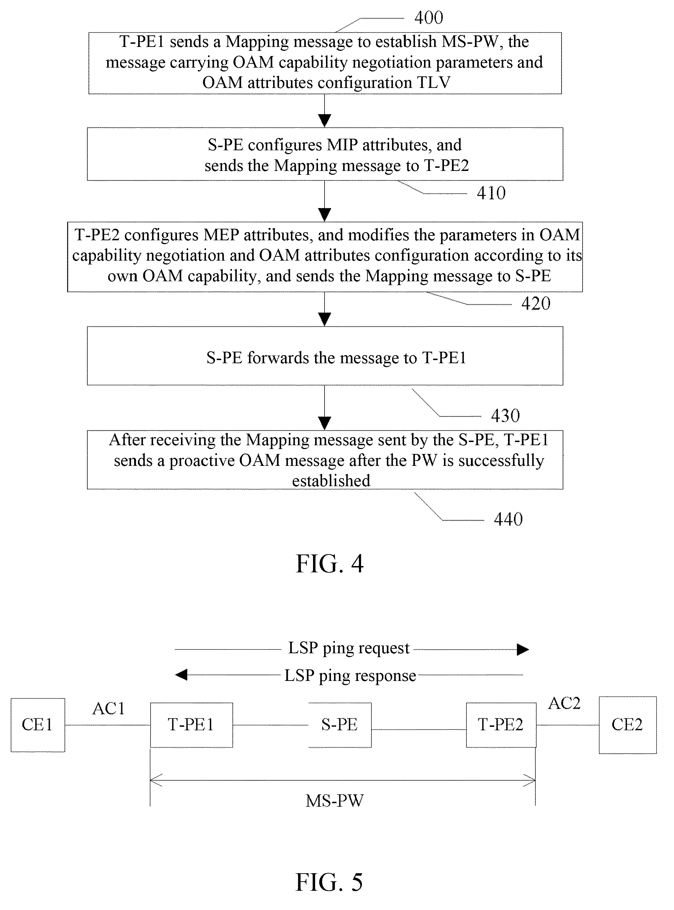

In this example, a plurality of pseudowires have one S-PE, as shown in FIG. 3. T-PE1 initiates signaling to establish MS-PW, and a LDP Mapping message carries parameters related to PW OAM capability negotiation and parameters related to PW OAM attributes configuration. The process of PW OAM capability negotiation is as follows, see FIG. 4, comprising:
according to the PW OAM capabilities supported by itself, T-PE1 informs the downstream S-PE and T-PE nodes that it supports these OAM capabilities. For example, T-PE1 may inform, in a VCCV capability notification, the downstream nodes of the control channel (CC) type and connectivity verification (CV) type supported by T-PE1; if T-PE1 supports PW status notification, it carries PW Status TLV in a Mapping message to inform the downstream nodes that T-PE1 supports PW status notification. Here, many new types are added by MPLS-TP for PW OAM, for example PM Loss, PM Delay, FMS, Lock Instruct, Diagnostic test, etc., and T-PE1 will also need to inform the downstream nodes that it support these OAM capabilities. The notification of newly added PW OAM capabilities may be carried in the following way:
a MPLS-TP PW OAM capability TLV is expanded to carry the OAM capabilities supported by itself, for example, the meanings of the three flag bits that can be defined are as follows respectively:
   L: packet loss; D: packet delay; F: FMS

If being set (i.e., being 1), it indicates that the T-PE1 node supports the OAM capability, and if being reset (i.e., being 0), it indicates that the T-PE1 node does not support the OAM capability.

Of course, only three kinds of proactive PW OAM expanded by MPLS-TP are listed, and other expansions, for example, on-demand OAM capabilities, including performance measurement/diagnosis test/locking, etc., or future expansions, can all be carried and indicated by the TLV. In addition, which newly expanded OAM capabilities the T-PE1 supports may also be indicated using other TLVs or by expanding existing TLV, which will all fall into the scope of the present invention.

In addition, when sending a Mapping message to the downstream, T-PE1 may not carry the capability notification, and it is defaulted that all capabilities are supported.

After receiving the Mapping message, the downstream S-PE/T-PE checks the TLV, and if it does not know or support the TLV, then PW is not successfully established; if it knows the TLV, then it resets those that are not supported in the Mapping message sent to the downstream or the opposite end, and only retains those supported fields.

Finally, each S-PE/T-PE node will acquire which newly expanded PW OAM capabilities the opposite end supports.

The process of carrying the parameters related to PW OAM configuration is as follows:
according to the PW OAM capabilities supported by itself, T-PE1 carries MPLS-TP PW OAM configuration TLV in a Mapping message to indicate that it will configure related parameters for those OAM attributess. Herein, four types are defined, namely VCCV BFD, PM/Loss, PM/Delay, FMS respectively, and more expansions should also fall into the spirit of the present invention. These attributes flag position bits indicate that a corresponding sub-TLV has to be carried in order to configure corresponding parameters; resetting does not require configuration of related parameters, i.e., the corresponding sub-TLV does not need to be carried.

If VCCV BFD is to be configured, then related parameters such as the version of BFD, per hop behavior (PHB), Local discriminator, transmission frequency, receiving frequency and so on need to be negotiated between two T-PEs. It may be that all of these parameters need to be negotiated, or only part of them needs to be negotiated and carried in the corresponding sub-TLVs. For example, T-PE1 node will send the local discriminator of its own end to T-PE2 node, and after the T-PE2 obtains the local discriminator, it will send the local discriminator of its own end to T-PE1 in a mapping message to be sent from T-PE2 to T-PE1, thereby, both T-PE1 and T-PE2 have the local discriminators of its own end and the opposite end and can use the discriminators to uniquely identify a BDF session; of course, the parameters are optional, i.e., the T-PE1 and T-PE2 may or may not negotiate the local discriminators, so as transmission frequency/receiving frequency/BFD status down time caused by default and so on. T-PE1 sends to T-PE2 maximum values of transmission frequency/receiving frequency, and the shortest time of BFD status down; upon check, if T-PE2 accepts the same values, then the values do not change and are fed back in a Mapping message sent from T-PE2 to T-PE1; if T-PE2 finds that the transmission frequency/receiving frequency is too high or/and the down time of BFD status is too short, T-PE2 returns a lower frequency or/and longer BFD status down time to T-PE1; after BFD parameters are successfully negotiated, and BFD function configuration is completed, the two ends transmit and receive BFD messages in the new frequency and coordinate the protection switching of the two ends in a longer BFD status down time.

If PM Loss is to be configured, then T-PE1 should inform the PHB value of the data message to be tested in the negotiation and the frequency of the PM loss OAM message sent by T-PE1. If T-PE2 accepts the frequency, T-PE2 returns the same value in a mapping message sent to T-PE1;if T-PE2 does not accept the frequency, then it sends a mapping message carrying a shorter measurement interval to T-PE 1.

Similarly, if PM Delay is to be configured, then T-PE1 should inform T-PE2 of the PHB value of the PM Delay OAM message, and the transmission frequency of the OAM message. If accepting the frequency, T-PE2 returns the same value in a mapping message sent to T-PE1;if T-PE2 does not accept the frequency, then it sends a mapping message carrying a shorter measurement interval to T-PE1.

As for FMS configuration, the two T-PEs can perform the configuration independently, and they do not have to be consistent; but in a transmission network, in order to facilitate maintenance of devices, it is hopeful that the behaviors of the two T-PEs be consistent, in which case the two ends may need to negotiate on the same parameter. If the same parameter is to be negotiated, T-PE1 will carry the PHB value and transmission frequency required by the local end in the corresponding sub-TLV. If accepting the frequency, T-PE2 will return the same value in a mapping message sent to T-PE1;if T-PE2 does not accept the frequency, then it sends a mapping message carrying a lower transmission frequency to T-PE1.

It should be noted that both MPLS-TP PW OAM capability TLV and MPLS-TP PW OAM configuration TLV are simultaneously carried in the mapping message initiated by the T-PE1. The PW OAM configuration TLV does not configure corresponding parameters until MPLS-TP PW OAM capability specifies certain OAM capability. MPLS-TP PW OAM capability may specify certain OAM capability while PW OAM configuration TLV does not configure corresponding parameters, but PW OAM configuration TLV cannot configure corresponding parameters when MPLS-TP PW OAM capability does not specify certain OAM capability.

In addition, if PW OAM configuration TLV is carried in the mapping message initiated by T-PE, the downstream S-PE node is required to configure MIP attributes, and the T-PE node is required to configure MEP attributes. Of course, a new TLV may be defined for the bits of these attributess, or the bits of these attributess are placed in PW status TLV, or are placed in MPLS-TP PW OAM capability, and the bits of these attributess are carried in a mapping message for explicitly notifying each downstream node to configure MEP or MIP attributes.

After the OAM attributes configuration between T-PE1 and T-PE2 is completed, the corresponding OAM message can be transmitted.

As shown in FIG.4, the method for pseudowire OAM attributes configuration provided in the present invention comprises the following steps:
In step 400, T-PE1 sends a Mapping message to establish MS-PW, the message carrying OAM capability negotiation parameters and parameters related to OAM attributes configuration;
in step 410, after receiving the Mapping message, S-PE configures MIP attributes, and sends the Mapping message to T-PE2;
in step 420, after receiving the Mapping message, T-PE2 configures MEP attributes, and retains or modifies the OAM capability negotiation parameters and parameters related to OAM attributes configuration according to its own OAM capability, and sends the Mapping message to S-PE;
in step 430, S-PE forwards the Mapping message to T-PE1;
in step 440, after receiving the Mapping message forwarded by the S-PE, T-PE1 sends a proactive OAM message after the PW is successfully established.

### Example two: configuring PW OAM attributes by LSP Ping

See FIG. 5, in this example, MS-PW is established dynamically or statically or in a dynamic-static combination manner, and after the MS-PW is successfully established, the proactive OAM attributes is configured using LSP ping.

In this scheme, firstly it is defaulted that the T-PE node has configured MEP attributes, while the S-PE node has configured MIP attributes. Then, T-PE1 node can send to T-PE2 a LSP ping request message, which may carries the MPLS-TP PW OAM capability TLV in the above Example one for negotiating the OAM capabilities supported by the two nodes of T-PE1 and T-PE2, and T-PE2 feeds back the OAM capabilities supported by itself to node A in a LSP ping response message.

Of course, it may also be defaulted that every node supports every OAM capability, and this negotiation process is not needed; or the capability negotiation is put in the process of PW establishment, or is statically configured by the network manager at the end point, and the OAM capability negotiation process may also be put together with the OAM attributes parameter configuration process described below.

After OAM capabilities are negotiated, T-PE1 sends to T-PE2 a LSP ping request message, which carries the MPLS-TP PW OAM configuration TLV carried in the Example one.

The process of carrying parameters related to PW OAM configuration is as follows:
T-PE1, according to the PW OAM capabilities supported by itself, carries MPLS-TP PW OAM configuration TLV in a LSP ping request. The format may refer to the following:
   It indicates in OAM Function Flags (OAM function flag bits) that it will configure related parameters for those OAM attributess, herein four types are defined, namely VCCV BFD, PM/Loss, PM/Delay, FMS respectively, and more expansions should also fall into the spirit of the present invention. If these attributes flag bits are set, it indicates that a corresponding sub-TLV has to be carried in order to configure corresponding parameters; and if the attributes flag bits are reset, it indicates that related parameters are not required to configure, i.e., the corresponding sub-TLV does not need to be carried.
   If VCCV BFD is to be configured, then related parameters such as the version of BFD, per hop behavior (PHB), Local discriminator, transmission frequency, receiving frequency and so on need to be negotiated by the two T-PEs. It may be that all of these parameters need to be negotiated, or only part of them needs to be negotiated and carried in the corresponding sub-TLVs. For example, T-PE1 node will send the local discriminator of its own end to T-PE2 node, and after the T-PE2 obtains the local discriminator, it will send the local discriminator of its own end to T-PE1 in a mapping message to be sent from T-PE2 to T-PE1, thereby, both T-PE1 and T-PE2 have the local discriminators of its own end and the opposite end and can use the discriminators to uniquely identify a BDF session; of course, the parameters are optional, i.e., the T-PE1 and T-PE2 may or may not negotiate the local discriminators.

Similar to the above local discriminators, for transmission frequency/receiving frequency/time of BFD status down caused by fault and so on, T-PE1 sends to T-PE2 maximum values of transmission frequency/receiving frequency, and the shortest down time of BFD status; upon check, if T-PE2 accepts the same values, then the values do not change and are fed back in a Mapping message sent from T-PE2 to T-PE1; if T-PE2 finds that the transmission frequency/receiving frequency is too high or/and the down time of BFD status is too short, T-PE2 returns a lower frequency or/and longer BFD status down time to T-PE1;after BFD parameters are successfully negotiated, and BFD function configuration is completed, the two ends transmit and receive BFD messages in the new frequency and coordinate the protection switching of the two ends in a longer BFD status down time.

If PM Loss is to be configured, then T-PE1 should inform the PHB value of the data message to be tested in the negotiation and the frequency of the PM loss OAM message sent by T-PE1. If T-PE2 accepts the frequency, T-PE2 returns the same value in the LSP ping response message sent to T-PE1; if T-PE2 does not accept the frequency, then it carries a shorter measurement interval in the LSP ping response message sent to T-PE1.

Similarly, if PM Delay is to be configured, then T-PE1 should inform T-PE2 of the PHB value of the PM Delay OAM message, and the transmission frequency of the OAM message. If accepting the frequency, T-PE2 returns the same value in a LSP ping response message sent to T-PE1; if T-PE2 does not accept the frequency, then it carries a shorter measurement interval in the LSP ping response message sent from T-PE2 to T-PE1.

As for FMS configuration, the two T-PEs can perform the configuration independently, and they do not have to be consistent; but in a transmission network, in order to facilitate maintenance of devices, it is hopeful that the behaviors of the two T-PEs be consistent, in which case the two ends may need to negotiate on the same parameter. If the same parameter is to be negotiated, T-PE1 will carry the PHB value and transmission frequency required by the local end in the corresponding sub-TLV. If accepting the frequency, T-PE2 will return the same value in a mapping message sent to T-PE1; if T-PE2 does not accept the frequency, then it carries a lower transmission frequency in a mapping message sent from T-PE2 to T-PE1.

After the OAM attributes configuration between T-PE1 and T-PE2 is completed, the corresponding OAM message can be transmitted.

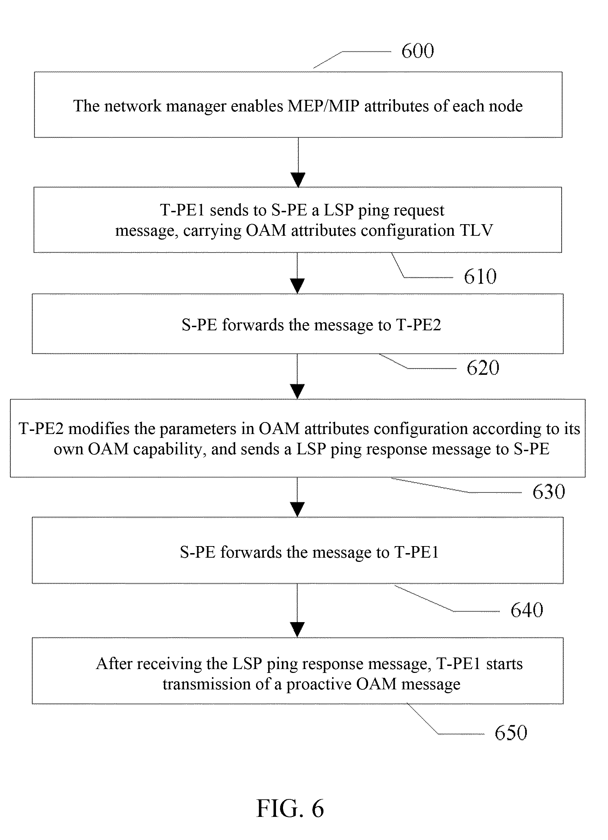

As shown in FIG. 6, the method for pseudowire OAM attributes configuration provided in the present invention comprises the following steps:
in step 600, the network manager enables MEP/MIP attributes of each node;
in step 610, T-PE1 sends to S-PE a LSP ping request message, carrying parameters related to OAM attributes configuration;
in step 620, S-PE forwards the LSP ping request message to T-PE2;
in step 630, after receiving the LSP ping request message, T-PE2 retains or modifies the parameters related to OAM configuration according to its own OAM capability, and sends a LSP ping response message to S-PE;
in step 640, S-PE forwards the LSP ping response message to T-PE1;
in step 650, after receiving the LSP ping response message forwarded by the S-PE, T-PE1 starts transmission of a proactive OAM message.

In the above Examples one and two, the present invention is described by taking a pseudowire including one S-PE as an example, and it may be spread to pseudowires including multiple S-PEs and to OAM configuration of single segment pseudowires.

The present invention further provides a system for configuring pseudowire operation administration and maintenance attributes, comprising an initiating end T-PE and an opposite end T-PE, wherein:
the initiating end T-PE is used to: during a dynamic establishment process of a pseudowire, exchange a signaling, which carries parameters related to pseudowireoperation administration and maintenance (OAM) attributes configuration, with the opposite end T-PE, and implement OAM attributes configuration according to the parameters related to OAM attributes configuration.

Wherein, the initiating end T-PE is used to: send to a downstream node a signaling, which carries the parameters related to OAM attributes configuration, the downstream node being a switching provider edge (S-PE) or the opposite end T-PE;
the opposite end T-PE is used to: after receiving the signaling carrying the parameters related to OAM attributes configuration from the initiating end T-PE or switching provider edge (S-PE), if the opposite end T-PE does not accept or modifies one or more parameters therein, carry the parameters related to OAM attributes configuration in a signaling to inform the initiating end T-PE of parameters supported by the opposite end T-PE.

Wherein, the initiating end T-PE is further used to: carry OAM capability negotiation parameters in the signaling to inform the downstream node of OAM capabilities supported by the T-PE;
the opposite end T-PE is further used to: after receiving the OAM capability negotiation parameters from the initiating end T-PE or switching provider edge (S-PE), if the opposite end T-PE does not support one or more of OAM capabilities therein, carry the OAM capability negotiation parameters in a signaling to inform the initiating end T-PE of OAM capabilities supported by the opposite end T-PE.

Wherein, the opposite end T-PE is further used to: configure MEP attributes upon receiving the signaling carrying the parameters related to OAM attributes configuration.

Wherein, the system further comprises a S-PE, which is used to: after receiving the signaling or LSP ping message from an upstream node, forward the signaling or LSP ping message to a downstream node, and after receiving the signaling or LSP ping message from a downstream node, forward the signaling or LSP ping message to an upstream node.

Wherein, the S-PE is further used to: configure MIP attributes upon receiving the signaling carrying the parameters related to OAM attributes configuration.

The present invention further provides a system for configuring pseudowire operation administration and maintenance attributes, comprising an initiating end T-PE and an opposite end T-PE, wherein:
the initiating end T-PE is used to: after a pseudowire is successfully established, exchange a LSP ping message, which carries parameters related to pseudowire OAM attributes configuration, with the opposite end T-PE, and implement OAM attributes configuration according to the parameters related to OAM attributes configuration.

Wherein, the initiating end T-PE is used to send to a downstream node a LSP ping message, which carries the parameters related to OAM attributes configuration, the downstream node being a switching provider edge (S-PE) or the opposite end T-PE;
the opposite end T-PE is used to: after receiving the parameters related to OAM attributes configuration from the initiating end T-PE or the S-PE, if the opposite end T-PE does not accept or modifies one or more parameters therein, carry the parameters related to OAM attributes configuration in a LSP ping message to inform the initiating end T-PE of parameters supported by the opposite end T-PE.

Wherein, the initiating end T-PE is further used to: carry OAM capability negotiation parameters in the LSP ping message to inform the downstream node of OAM capabilities supported by the T-PE;
the opposite end T-PE is further used to: after receiving the OAM capability negotiation parameters from the initiating end T-PE or switching provider edge (S-PE), if the opposite end T-PE does not support one or more of OAM capabilities therein, carry the OAM capability negotiation parameters in a LSP ping message to inform the initiating end T-PE of OAM capabilities supported by the opposite end T-PE.

Obviously, a person having ordinary skill in the art should appreciate that each module or each step of the present invention as above is implemented by a universal computing device, and they may be integrated in a single computing device or distributed over a network composed of a plurality of computing devices. Optionally, they can be implemented by executable program codes of a computing device, such that they can be stored in a storage device and executed by the computing device, and in certain case, the steps shown or described can be executed in an order different from which is described here, or they are made into each integrated circuit module respectively, or multiple modules or steps among them are implemented in a single integrated circuit module. Thus, the present invention is not limited to any particular form of combination of hardware and software.

The above examples are only preferred examples of the present invention, and are not used to limit the present invention. For a person having ordinary skill in the art, the present invention may have various modifications and changes. Any modification, equivalent substitution and improvement made within the spirit and principle of the present invention should be within the protection scope of the present invention.

### Industrial Applicability

In the solution of the present invention, by adding negotiation of newly expanded capabilities of PW OAM, and adding a flow of OAM attributes configuration, the proactive PW OAM attributes can be configured during the process of establishing a PW through signaling, thus simplifying network management operation; or the proactive PW OAM attributes can be configured after a PW is successfully established by carrying negotiation of capabilities of PW OAM in the LSP ping and adding a flow of OAM attributes configuration, which is more applicable for statically established PWs or PWs established in a static- dynamic combination manner.

## Claims

1. A method for configuring pseudowire operation administration and maintenance attributes, comprising following steps of:
during a dynamic establishment process of a pseudowire, provider edges (PEs) exchanging a signaling, which carries parameters related to pseudowire operation administration and maintenance (OAM) attributes configuration, with each other, and signaling receivers implementing OAM attributes configuration according to the parameters related to OAM attributes configuration.

2. The method according to claim 1, wherein,
the PEs comprise an initiating end terminating PE (T-PE) and an opposite end T-PE; the signaling receivers comprise an initiating end T-PE and an opposite end T-PE, and the step of the PEs exchanging a signaling with each other comprises:
the initiating end T-PE sending to a downstream node a signaling, which carries the parameters related to OAM attributes configuration, the downstream node being a switching provider edge (S-PE) or the opposite end T-PE;
after receiving the signaling carrying the parameters related to OAM attributes configuration from the initiating end T-PE or switching provider edge (S-PE), if the opposite end T-PE does not accept or modifies one or more parameters therein, carrying the parameters related to OAM attributes configuration in a signaling to inform the initiating end T-PE of parameters supported by the opposite end T-PE.

3. The method according to claim 2, wherein, the step of the PEs exchanging a signaling further comprises:
the initiating end T-PE further carrying OAM capability negotiation parameters in the signaling to inform the downstream node of OAM capabilities supported by the T-PE;
after receiving the OAM capability negotiation parameters from the initiating end T-PE or switching provider edge (S-PE), if the opposite end T-PE does not support one or more of OAM capabilities therein, carrying OAM capability negotiation parameters in a signaling to inform the initiating end T-PE of OAM capabilities supported by the opposite end T-PE.

4. The method according to claim 2 or 3, wherein, upon receiving the signaling carrying the parameters related to OAM attributes configuration, the downstream node of the initiating end T-PE configures MIP attributes or MEP attributes.

5. A method for configuring pseudowire operation administration and maintenance attributes, comprising following steps of: after a pseudowire is successfully established, provider edges (PEs) exchanging a LSP ping message, which carries parameters related to pseudowire OAM attributes configuration, with each other, and message receivers implementing OAM attributes configuration according to the parameters related to OAM attributes configuration.

6. The method according to claim 5, wherein,
the PEs comprise an initiating end terminating T-PE and an opposite end T-PE; the signaling receivers comprise an initiating end T-PE and an opposite end T-PE, and the step of the PEs exchanging a LSP ping message with each other comprises:
the initiating end T-PE sending to a downstream node a LSP ping message, which carries the parameters related to OAM attributes configuration, the downstream node being a switching provider edge (S-PE) or the opposite end T-PE;
after receiving the parameters related to OAM attributes configuration from the initiating end T-PE or the S-PE, if the opposite end T-PE does not accept or modifies one or more parameters therein, carrying the parameters related to OAM attributes configuration in a LSP ping message to inform the initiating end T-PE of parameters supported by the opposite end T-PE.

7. The method according to claim 6, wherein, the step of the PEs exchanging a LSP ping message further comprises:
the initiating end T-PE further carrying OAM capability negotiation parameters in the LSP ping message to inform the downstream node of OAM capabilities supported by the T-PE;
after receiving the OAM capability negotiation parameters from the initiating end T-PE or switching provider edge (S-PE), if the opposite end T-PE does not support one or more of OAM capabilities therein, carrying the OAM capability negotiation parameters in a LSP ping message to inform the initiating end T-PE of OAM capabilities supported by the opposite end T-PE.

8. A system for configuring pseudowire operation administration and maintenance, comprising an initiating end terminating PE (T-PE) and an opposite end T-PE, wherein:
the initiating end T-PE is configured to: during a dynamic establishment process of a pseudowire, exchange a signaling, which carries parameters related to pseudowire operation administration and maintenance (OAM) attributes configuration, with the opposite end T-PE, and implement OAM attributes configuration according to the parameters related to OAM attributes configuration.

9. The system according to claim 8, wherein,
the initiating end T-PE is configured to: send to a downstream node a signaling, which carries the parameters related to OAM attributes configuration, the downstream node being a switching provider edge (S-PE) or the opposite end T-PE;
the opposite end T-PE is configured to: after receiving the signaling carrying the parameters related to OAM attributes configuration from the initiating end T-PE or switching provider edge (S-PE), if the opposite end T-PE does not accept or modifies one or more parameters therein, carry the parameters related to OAM attributes configuration in a signaling to inform the initiating end T-PE of parameters supported by the opposite end T-PE.

10. The system according to claim 9, wherein,
the initiating end T-PE is further configured to: carry OAM capability negotiation parameters in the signaling to inform the downstream node of OAM capabilities supported by the T-PE;
the opposite end T-PE is further configured to: after receiving the OAM capability negotiation parameters from the initiating end T-PE or switching provider edge (S-PE), if the opposite end T-PE does not support one or more of OAM capabilities therein, carry the OAM capability negotiation parameters in a signaling to inform the initiating end T-PE of OAM capabilities supported by the opposite end T-PE.

11. The system according to claim 9, wherein, the opposite end T-PE is further configured to: configure MEP attributes upon receiving the signaling carrying the parameters related to OAM attributes configuration.

12. The system according to claim 8 or 9, wherein, the system further comprises a S-PE, which is configured to: after receiving the signaling or LSP ping message from an upstream node, forward the signaling or LSP ping message to a downstream node, and after receiving the signaling or LSP ping message from a downstream node, forward the signaling or LSP ping message to an upstream node.

13. The system according to claim 12, wherein, the S-PE is further configured to: configure MIP attributes upon receiving the signaling carrying the parameters related to OAM attributes configuration.

14. A system for configuring pseudowire operation administration and maintenance attributes, comprising an initiating end terminating PE (T-PE) and an opposite end T-PE, wherein:
the initiating end T-PE is configured to: after a pseudowire is successfully established, exchange a LSP ping message, which carries parameters related to pseudowire OAM attributes configuration, with the opposite end T-PE, and implement OAM attributes configuration according to the parameters related to OAM attributes configuration.

15. The system according to claim 14, wherein,
the initiating end T-PE is further configured to send to a downstream node a LSP ping message, which carries the parameters related to OAM attributes configuration, the downstream node being a switching provider edge (S-PE) or the opposite end T-PE;
the opposite end T-PE is configured to: after receiving the parameters related to OAM attributes configuration from the initiating end T-PE or the S-PE, if the opposite end T-PE does not accept or modifies one or more parameters therein, carry the parameters related to OAM attributes configuration in a LSP ping message to inform the initiating end T-PE of parameters supported by the opposite end T-PE.

16. The system according to claim 15, wherein,
the initiating end T-PE is further configured to: carry OAM capability negotiation parameters in the LSP ping message to inform the downstream node of OAM capabilities supported by the T-PE;
the opposite end T-PE is further configured to: after receiving the OAM capability negotiation parameters from the initiating end T-PE or switching provider edge (S-PE), if the opposite end T-PE does not support one or more of OAM capabilities therein, carry the OAM capability negotiation parameters in a LSP ping message to inform the initiating end T-PE of OAM capabilities supported by the opposite end T-PE.

17. A terminal for configuring pseudowire operation administration and maintenance attributes, and when serving as an initiating end terminating PE (T-PE), the terminal is configured to: during a dynamic establishment process of a pseudowire, exchange a signaling, which carries parameters related to pseudowireoperation administration and maintenance (OAM) attributes configuration, with an opposite end T-PE, and implement OAM attributes configuration according to the parameters related to OAM attributes configuration.

18. The terminal according to claim 17, wherein, the initiating end T-PE is configured to: send to a downstream node a signaling, which carries the parameters related to OAM attributes configuration, the downstream node being a switching provider edge (S-PE) or the opposite end T-PE;
the initiating end T-PE is further configured to: carry OAM capability negotiation parameters in the signaling to inform the downstream node of OAM capabilities supported by the T-PE.

19. The terminal according to claim 18, wherein, the terminal can also serve as an opposite end T-PE, and when serving as an opposite end T-PE, the terminal is configured to: after receiving the signaling carrying the parameters related to OAM attributes configuration from the initiating end T-PE or a switching provider edge (S-PE), if the terminal does not accept or modifies one or more parameters therein, carry the parameters related to OAM attributes configuration in a signaling to inform the initiating end T-PE of parameters supported by the opposite end T-PE.

20. The terminal according to claim 19, wherein, the opposite end T-PE is further configured to: after receiving the OAM capability negotiation parameters from the initiating end T-PE or switching provider edge (S-PE), if the opposite end T-PE does not support one or more of OAM capabilities therein, carry the OAM capability negotiation parameters in a signaling to inform the initiating end T-PE of OAM capabilities supported by the opposite end T-PE;
the opposite end T-PE is further configured to: configure MEP attributes upon receiving the signaling carrying the parameters related to OAM attributes configuration.

21. A terminal for configuring pseudowire operation administration and maintenance attributes, when serving as an initiating end terminating PE (T-PE), the terminal is configured to: after a pseudowire is successfully established, exchange a LSP ping message, which carries parameters related to pseudowire OAM attributes configuration, with an opposite end T-PE, and implement OAM attributes configuration according to the parameters related to OAM attributes configuration.

22. The terminal according to claim 21, wherein, the initiating end T-PE is configured to: send to a downstream node a LSP ping message, which carries the parameters related to OAM attributes configuration, the downstream node being a switching provider edge (S-PE) or the opposite end T-PE;
the initiating end T-PE is further configured to: carry OAM capability negotiation parameters in the LSP ping message to inform the downstream node of OAM capabilities supported by the T-PE.

23. The terminal according to claim 22, wherein, the terminal also serves as an opposite end T-PE, and the opposite end T-PE is configured to: after receiving the parameters related to OAM attributes configuration from the initiating end T-PE or the S-PE, if the opposite end T-PE does not accept or modifies one or more parameters therein, carry the parameters related to OAM attributes configuration in a LSP ping message to inform the initiating end T-PE of parameters supported by the opposite end T-PE;
the opposite end T-PE is further configured to: after receiving the OAM capability negotiation parameters from the initiating end T-PE or switching provider edge (S-PE), if the opposite end T-PE does not support one or more of OAM capabilities therein, carry the OAM capability negotiation parameters in a LSP ping message to inform the initiating end T-PE of OAM capabilities supported by the opposite end T-PE.
